# EUROPEAN PATENT APPLICATION

(11) **EP 4 775 010 A1**
(43) Date of publication of application: **15.07.2026**
(21) Application number: 25216169.0
(22) Date of filing: 17.11.2025
(51) Int. Cl.: A01C 7/20

(54) **SYSTEM FOR MODIFYING A COMPLIANCE OF A DOWNFORCE ACTUATOR AND METHOD OF OPERATING SUCH**

(30) Priority: 10.01.2025 US 202519016849
(71) Applicant: Deere & Company, Moline, IL 61265 (US)
(72) Inventor: MARO, Randall A, 68163 Mannheim (DE)
(74) Representative: Reichert, Christian

(57) **Abstract**

A system for modifying a compliance of a downforce actuator (414) of an agricultural machine is disclosed. The system comprising: a row unit (106) coupled to a tool bar (102) through a linkage assembly (152); an actuator (414) configured to selectively alter the downforce applied to the row unit (106), the actuator (414) having a downforce side configured to bias the row unit (106) towards an underlying surface (410) and an upforce side configured to bias the row unit (106) away from the underlying surface (410); an actuator assembly (110) configured to selectively provide fluid separately to the downforce side and the upforce side of the actuator (414); and a control system (402) configured to selectively engage the actuator assembly (110) to modify a downforce pressure provided to the downforce side and an upforce pressure provided to the upforce side; wherein the control system (402) is configured to selectively transition the actuator (414) between a first compliance configuration and a second compliance configuration; wherein the control system (402) modifies the downforce pressure and the upforce pressure of the actuator assembly (110) between the first compliance configuration and the second compliance configuration and maintains a pressure difference between the downforce pressure and the upforce pressure between the first compliance configuration and the second compliance configuration. Further, a method of modifying response characteristics of the actuator (414) is disclosed.

## Description

### Field of Disclosure

The present disclosure relates to an agricultural vehicle having one or more actuator controlling downforce of a row unit and more specifically to selectively controlling the one or more actuator to adjust the compliance of the actuator.

### Background of the Disclosure

Some agricultural machines include planters that have row units with downforce actuators. Some row units on a planter follow the ground profile by using a combination of gauge wheels (to keep the row unit from sinking into the ground) and a downforce assembly that has an actuator that imparts a downforce on the row unit to push disc openers into the ground. Some current downforce assemblies provide a relatively fixed downforce, which may or may not be adjustable while planting.

Row units that are moving over soil while planting can tend to bounce after hitting a hard patch of soil. This can result in incorrect seed placement. The seeds can be at an incorrect depth, or the seeds can even be dropped on the surface of the ground, because the row units can bounce completely off the ground.

In some systems, an operator can address this by increasing the downforce on the row unit. However, depending upon the different types of soil conditions, this can actually be detrimental. For example, if the downforce is too high, the gauge wheels can compress the sides of the furrow too much so that the side walls are too hard. Also, the seed depth can be too great.

It can thus be seen that gauge wheel downforce on planting and seeding equipment is an important piece of information that is used to control the planter. The planter is controlled in an attempt to ensure that enough downforce is applied to maintain a constant planting depth, but that not too much is applied so the soil around the seed is not unduly compacted.

### Summary

One embodiment is a system for modifying a compliance of a downforce actuator of an agricultural machine. The system has a row unit coupled to a tool bar through a linkage assembly, an actuator configured to selectively alter the downforce applied to the row unit, the actuator having a downforce side configured to bias the row unit towards an underlying surface and an upforce side configured to bias the row unit away from the underlying surface, an actuator assembly configured to selectively provide fluid separately to the downforce side and the upforce side of the actuator, and a control system configured to selectively engage the actuator assembly to modify a downforce pressure provided to the downforce side and an upforce pressure provided to the upforce side. The control system is configured to selectively transition the actuator between a first compliance configuration and a second compliance configuration. The control system modifies the downforce pressure and the upforce pressure of the actuator assembly between the first compliance configuration and the second compliance configuration and maintains a pressure difference between the downforce pressure and the upforce pressure between the first compliance configuration and the second compliance configuration.

In one example of this embodiment, the downforce side of the actuator is fluidly coupled to a downforce accumulator and the first compliance configuration provides a first downforce accumulator displacement and the second compliance configuration provides a second downforce accumulator displacement, the first downforce accumulator displacement being different from the second downforce accumulator displacement. In part of this example, the upforce side of the actuator is fluidly coupled to an upforce accumulator.

Another example of this embodiment includes a user interface configured to receive a user input selecting the first compliance configuration or the second compliance configuration, wherein the control system is configured to modify the actuator assembly to the first compliance configuration or the second compliance configuration based on the user input.

In another example of this embodiment, the actuator assembly comprises a downforce valve fluidly coupled to the downforce side and configured to selectively alter the pressure of fluid provided to the downforce side of the actuator, the downforce valve being selectively controllable by the control system. In part of this example, the actuator assembly comprises an upforce valve fluidly coupled to the upforce side and configured to selectively alter the pressure of fluid provided to the upforce side of the actuator, the upforce valve being selectively controllable by the control system.

In another example of this embodiment, the first compliance configuration provides a first force change profile of the actuator and the second compliance configuration provides a second force change profile of the actuator, the first force change profile being different from the second force change profile.

Another embodiment of this disclosure is a method of modifying response characteristics of an actuator. The method includes selectively transitioning an actuator between a first compliance configuration and a second compliance configuration; and modifying a first pressure provided to a first side of the actuator and a second pressure provided to a second side of the actuator when transitioning between the first compliance configuration and the second compliance configuration. In this method, a pressure difference between the first side and the second side is substantially the same between the first compliance configuration and the second compliance configuration.

In one example of this embodiment, the first compliance configuration displaces a first accumulator fluidly coupled to the first side a first displacement and the second compliance configuration displaces the first accumulator a second displacement, the first displacement being different from the second displacement. In part of this example, the first compliance configuration displaces a second accumulator fluidly coupled to the second side a third displacement and the second compliance configuration displaces the second accumulator a fourth displacement, the third displacement being different from the fourth displacement. Another example of this embodiment includes receiving a user input selecting the first compliance configuration or the second compliance configuration and modifying an actuator assembly to the first compliance configuration or the second compliance configuration based on the user input.

Yet another example of this embodiment includes selectively altering the pressure of fluid provided to the first side of the actuator with a first valve. Part of this example includes selectively altering the pressure of fluid provided to the second side of the actuator with a second valve.

In another example of this embodiment, the first compliance configuration provides a first force change profile of the actuator and the second compliance configuration provides a second force change profile of the actuator, the first force change profile being different from the second force change profile.

Yet another embodiment of this disclosure is a system for controlling a downforce response of a row unit for an agricultural machine. The system has an actuator configured to selectively modify a downforce applied to a row unit and an actuator assembly configured to selectively alter a downforce pressure and an upforce pressure applied to the actuator. The actuator assembly can provide a first compliance configuration of the actuator having a first downforce pressure and a first upforce pressure and a second compliance configuration of the actuator having a second downforce pressure and a second upforce pressure. The first downforce pressure is different from the second downforce pressure and the first upforce pressure is different from the second upforce pressure. The difference between the first downforce pressure and the first upforce pressure is substantially the same as the difference between the second downforce pressure and the second upforce pressure.

In one example of this embodiment, the first compliance configuration provides a first force change profile and the second compliance configuration provides a second force change profile that is different from the first force change profile.

Another example of this embodiment includes an accumulator fluidly coupled to the actuator, wherein the first compliance configuration provides a first accumulator displacement and the second compliance configuration provides a second accumulator displacement that is different from the first accumulator displacement.

In yet another example of this embodiment, the actuator assembly is configured to provide a third compliance configuration of the actuator having a third downforce pressure and a third upforce pressure. The third downforce pressure is different from the first downforce pressure and the second downforce pressure and the third upforce pressure is different from the first upforce pressure and the second upforce pressure. In part of this example, the difference between the first downforce pressure and the first upforce pressure is substantially the same as the difference between the third downforce pressure and the third upforce pressure.

In another example of this embodiment, the actuator assembly implements the first compliance configuration or the second compliance configuration based on a user input.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a top view of one example of an agricultural machine;
Fig. 2 shows a side view of one example of a row unit of the planting machine shown in Fig. 1;
Fig. 3 is a block diagram of one example of various components of the row unit shown in Fig. 2;
Fig. 4 is a schematic view of another example of a row unit assembly; and
Fig. 5 is a schematic diagram of a hydraulic assembly of an agricultural machine.

Corresponding reference numerals are used to indicate corresponding parts throughout the several views.

### Detailed Description

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

The present disclosure applies to a wide variety of different types of machines. For instance, it can be applied to towed implements, such as planting machines, tillage implements, balers, etc. It can also apply to self-propelled machines. Each of these categories of machines include several different types of machines. For instance, planting machines include row crop planters, grain drills (or box drills), air seeders, etc. Further still, the teachings of this disclosure apply to any assembly that utilizes an actuator having fluid inputs on either side of a piston, among other applications. While a downforce actuator on an agricultural machine is shown and described in detail herein, other applications of an actuator are contemplated herein as well. Many of these different types of machines include controlling a downwardly directed force on some portion of the machine. The present discussion proceeds with respect to an example in which the machine is a planting machine, and the planting machine is a row crop planter, that is towed by a towing vehicle, such as a tractor. However, it will be appreciated that this is only one example, and the teachings of the present disclosure may be applied to other types of machines as well.

U.S. Patent No. 10,091,926 titled "DOWNFORCE SENSING AND CONTROL WITH ACCELERATION CORRECTION" considers mechanical and control assemblies for an actuator configured to control the downforce applied to a row unit, which is related to the subject-matter disclosed herein. Accordingly, the contents of the Field of the Description, Background, Summary, Brief Description of the Drawings, Detailed Description, and Claims sections from U.S. Patent No. 10,091,926 are hereby incorporated herein by reference along with the corresponding figures.

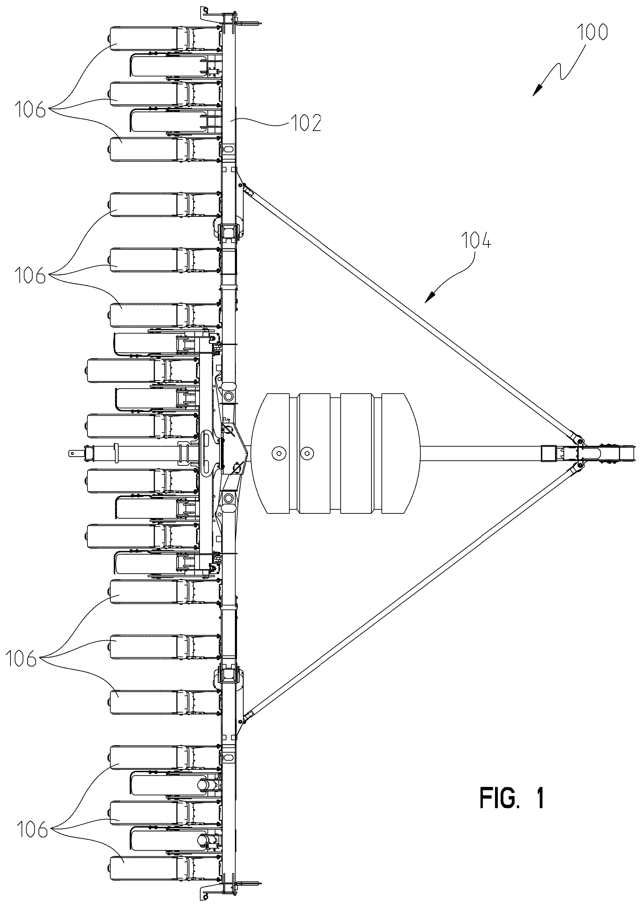

Referring to Fig. 1, a top view of one example of an agricultural planting machine 100 is illustrated. Machine 100 is a row crop planting machine that illustratively includes a toolbar 102 that is part of a frame 104. Also illustrated in Fig. 1 is a plurality of planting row units 106 are mounted to the toolbar 102. Machine 100 can be towed behind another machine, such as a tractor. While a specific number of row units 106 are illustrated in Fig. 1, the teachings of this disclosure can be applied to machines 100 having more, or fewer, row unit 106 than those depicted in Fig. 1.

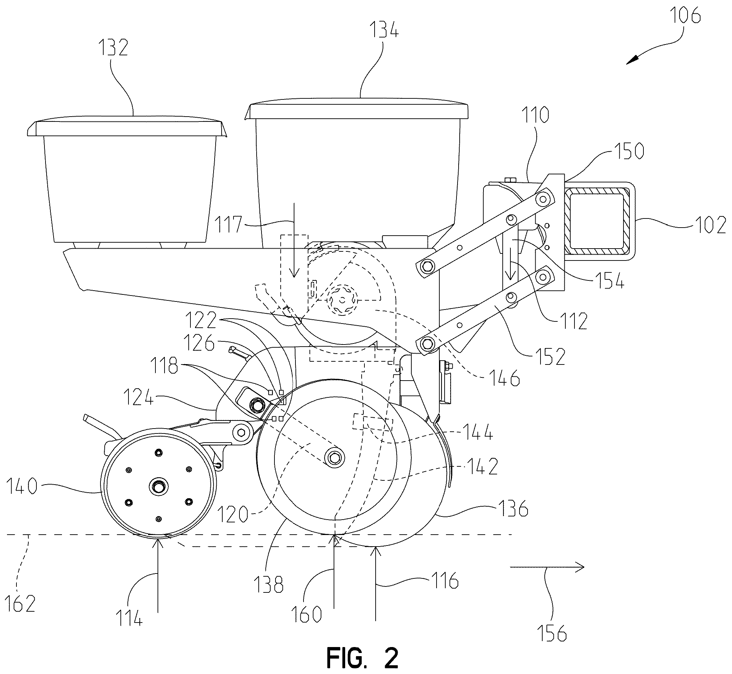

Referring now to Fig. 2, a side view showing one example of a row unit 106 is illustrated. Row unit 106 is illustratively fastened to the other row units shown in Fig. 1 by toolbar 102. Row unit 106 illustratively includes a fertilizer tank 132 and a seed storage tank 134. It also illustratively includes a disc opener 136, a set of gauge wheels 138, and a set of closing wheels 140. Seeds are illustratively dropped through a seed tube 142 or other seed delivery system such as a brush belt, from seed storage tank 134. The seeds can be sensed by a seed sensor 144 and the rate at which seeds are dropped can be controlled using seed meter 146.

While Fig. 2 illustrated a specific seed meter 146, there are different types of seed meters that may be utilize for the teachings of this disclosure. For instance, in one example, each row unit 106 need not have its own seed meter. Instead, metering or other singulation or seed dividing techniques can be performed at a central location, for groups of row units 106. The metering systems can include rotatable discs, rotatable concave or bowl-shaped devices, among others. The seed meter 146 can be a gravity drop system (as shown in Fig. 2) in which seeds are dropped through the seed tube 142 and fall (via gravitational force) through the seed tube into the seed trench. Other types of seed delivery systems are assistive systems, in that they do not simply rely on gravity to move the seed from the metering system into the ground. Instead, such systems actively capture the seeds from the seed meter and physically move the seeds from the meter to a lower opening, where they exit into the ground or trench.

An actuator 110 is mounted on a coupling assembly 150 that couples row unit 106 to toolbar 102. Actuator 110 can be a hydraulic actuator, a pneumatic actuator, a spring-based mechanical actuator, or any other actuators. In the example shown in Fig. 2, a rod 112 is coupled to a parallel linkage 152 and is used to exert downforce (in the direction indicated by arrow 154) on row unit 106. The downforce (which includes force 154 exerted by actuator 110 plus the force due to gravity acting on row unit 106 and indicated by arrow 117) is offset by upwardly directed forces acting on closing wheels 140 (from ground 162, and as indicated by arrow 114) and double disc opener 136 (again from ground 162, and indicated by arrow 116). The remaining force (the sum of the force vectors indicated by arrows 154 and 117, minus the sum of the force vectors exerted on double disc opener 136 and closing wheel 140 and indicated by arrows 114 and 116 and the force on any other ground engaging component on the row unit, not shown), is the differential force indicated by arrow 160, and this force acts on gauge wheels 148. This load may be sensed by a gauge wheel load sensor 118 which may be located anywhere on row unit 106 where it can sense that load. It can also be placed where it may not sense that load directly, but a characteristic indicative of that load. Both sensing the load directly or indirectly are contemplated herein and will be referred to sensing a force characteristic indicative of that load (or force). For example, it can be disposed near a set of gauge wheel control arms 120 that control gauge wheels 138. It can be disposed on a gauge wheel 138 itself, or on support member 124. It can be disposed elsewhere as well.

Sensor 118 can be any of a wide variety of different types of sensors. In one example, it is a strain gauge sensor, and, as mentioned above, it can be mounted on a gauge wheel 138 itself, or on the control arms 120 or on support 124 or elsewhere.

In operation, as row unit 106 travels generally in the direction indicated by arrow 156, the double disc opener 136 opens a furrow in the soil, seeds are dropped through seed tube 142, and closing wheels 140 close the soil. Gauge wheels 138 control the depth of the furrow. Gauge wheels 138 can include the gauge wheel load sensor 118, that senses the load exerted (generally indicated by arrow 160) on the gauge wheels 138. In one example, it may be desirable to keep gauge wheels 138 in constant contact with ground 162 over which the row unit 106 is travelling, but not to exert too much pressure so that they undesirably compact or otherwise effect the soil. In the example shown, support member 124 also has a positive stop 126 to limit the upward movement of gauge wheels 138. As gauge wheels 138 move upwardly, the support arms 120 engage positive stop 126 to limit their upward movement. In this case, any additional upward movement would move support member 124 upwardly as well. However, when double disc opener 136 hits a hard patch of ground (for instance) it may move upward. This can impart an upwardly-directed acceleration on row unit 106.

Therefore, in one example, an acceleration sensor 122 is also disposed on row unit 106 to sense the accelerations on row unit 106. Two different locations for sensor 122 are shown in Fig. 2, but they are examples only. In one example, acceleration sensor 122 is disposed on the support 124, while in another example, it can be disposed on the control arms 120 or on one or more of the gauge wheels 138, themselves. In one example, sensors 118 and 122 are disposed on the same physical piece of row unit 106. They can, however, be separated. For instance, sensor 118 may be on control arms 120 while sensor 122 is on the gauge wheels 138 themselves, or on support 124, or elsewhere. However, other locations for the sensors, and the types of sensors used, are also contemplated herein.

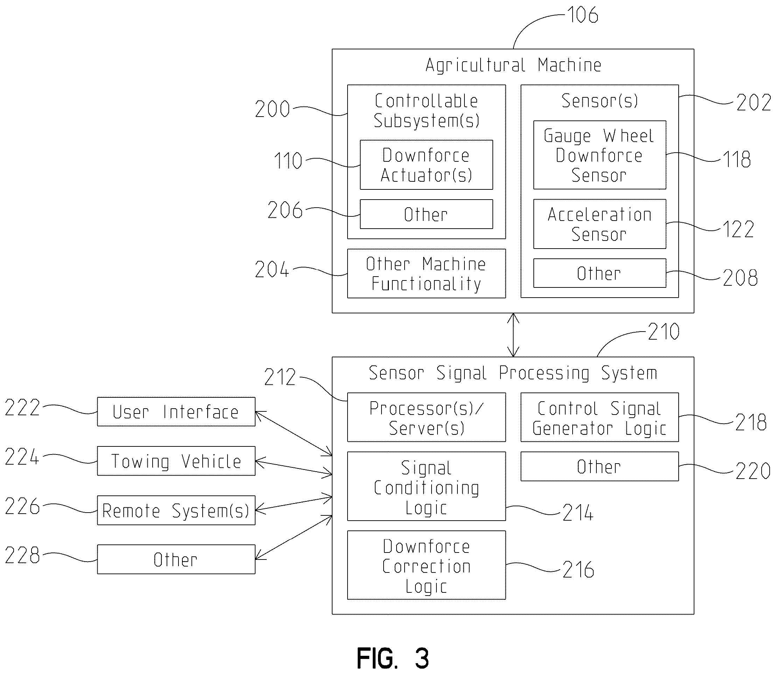

A block diagram illustrating one example of the items shown in Fig. 2, in block diagram form, is illustrated in Fig. 3. Some of the items shown in Fog. 3 are similar to those shown in Fig. 2, and they are similarly numbered. It can be seen in Fig. 3 that the agricultural machine being discussed has a row unit 106. It includes controllable subsystems 200, sensors 202, and it can include a wide variety of other machine functionality 204. Controllable subsystems 200 can include one or more downforce actuators 110, and a variety of other controllable subsystems 206. Sensors 202 can include gauge wheel downforce sensor 118, acceleration sensor 122, and they can include a wide variety of other sensors 208.

In the example shown in Fig. 3, the items on the agricultural machine are communicatively coupled with a sensor signal processing system 210. System 210 can be disposed on the agricultural machine (e.g., row unit 106), itself, or on a towing vehicle (such as a tractor) or elsewhere. It is shown as being separate from the agricultural machine (e.g., row unit 106) for the sake of example only.

In Fig. 3, sensor signal processing system 210 can include one or more processors or servers 212, signal conditioning logic 214, downforce correction logic 216, control signal generator logic 218, and it can include a wide variety of other items 220. System 210 can also be coupled to a wide variety of other systems or items as well. For instance, Fig. 3 shows that system 210 that can be coupled to a user interface mechanism 222, towing vehicle 224, one or more other remote systems 226, or a wide variety of other items 228.

Downforce actuator 110 is illustratively controlled to apply a downforce to the agricultural machine (e.g., row unit 106). Gauge wheel downforce sensor 118, as discussed above, senses the downforce exerted on gauge wheels 138, and acceleration sensor 122 (as also discussed above) senses any accelerations imparted on gauge wheels 138. Signals generated by sensors 118 and 122 are provided to sensor signal processing system 210. Signal conditioning logic 214 illustratively conditions those signals, such as applying any desirable filtering, linearization, normalization, or other signal conditioning. Downforce correction logic 216 corrects the downforce indicated by the gauge wheel downforce sensor signal generated by sensor 118 for the accelerations imparted on row unit 106 and sensed by acceleration sensor 122. This provides a more accurate indication of the actual downforce on gauge wheels 138. This corrected value can be provided to control signal generator logic 218 which illustratively generates an action signal, such as a control signal, that can be applied to various items. For instance, the action signal can be provided to user interface mechanism 222 to generate a user interface display indicative of the downforce being applied to gauge wheels 138. It can be sent to a power system on towing vehicle 224 which may provide power to downforce actuators 110, so that the towing vehicle 224 can automatically adjust the downforce being applied by downforce actuators 110. It can be provided to one or more remote systems 226 for storage or later analysis, or for real time processing in other ways. It can be provided to other items 228 as well.

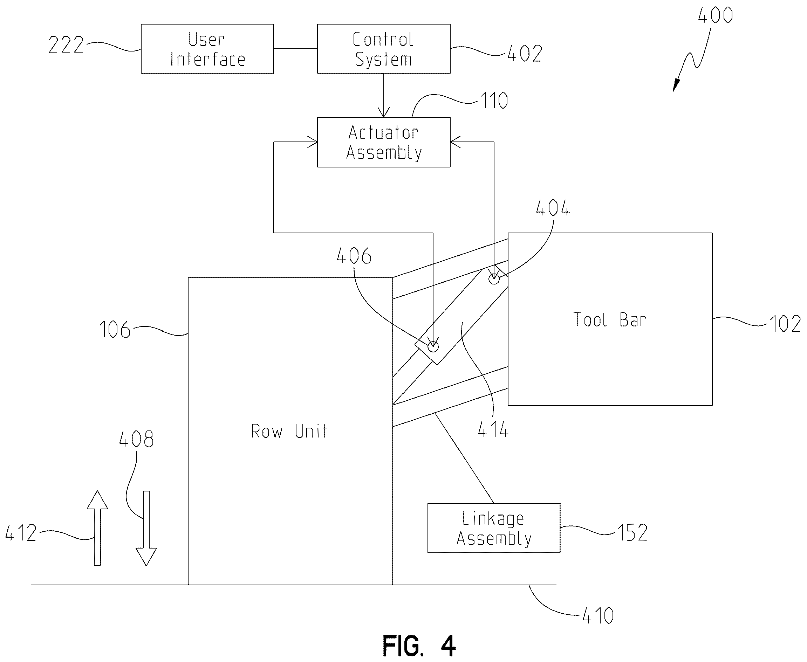

Referring now to Fig. 4, one schematic embodiment of a row unit assembly 400 is illustrated. The row unit assembly 400 may have a control system 402 configured to selectively control the actuator assembly 110. The control system 402 may be a controllable subsystem 200 of the agricultural machine 106. Alternatively, the control system 402 may be part of the sensor signal processing system 210. Regardless, the control system 402 may be an electro-hydraulic or electro-pneumatic system that selectively controls fluid allocation to the actuator assembly 110. The actuator assembly 110 may contain an actuator 414 positioned between the tool bar 102 and the row unit 106 to selectively reposition or otherwise provide a biasing force to the row unit 106 relative to the tool bar 102 for at least the reasons discussed herein, among others. In one example, the actuator 414 is positioned between components of the linkage assembly 152 to provide the corresponding biasing forces discussed herein. However, this is just an example of the many configurations and locations of the actuator 414 contemplated herein. While a parallel linkage assembly 152 is discussed, other embodiments may implement the teachings discussed herein with a non-parallel linkage assembly 152 or no linkage assembly at all. Accordingly, this disclosure contemplates applying the teachings discussed herein to any agricultural machine having an actuator that can selectively apply a downforce to an assembly, among other types of machines as well.

The actuator 414 may be a hydraulic or pneumatic actuator containing a piston separating a first, or down-side 404, chamber from a second, or upside 406, chamber of a cylinder of the actuator 414. A rod may be coupled to the piston to selectively move relative to the cylinder depending on the pressures of the fluid in the corresponding sides 404, 406 along with other forces that may be acting on the actuator 414. In this configuration, the actuator assembly 110 can selectively provide a net positive pressure to the down-side 404 relative to the upside 406 to provide a supplemental downforce 408 to the row unit 106, applying a force to the row unit 106 towards an underlying surface 410. Alternatively, the actuator assembly 110 can selectively provide a net positive pressure to the upside 406 relative to the down-side 404 to provide a supplemental upforce 412 to the row unit 106, providing a force to the row unit 106 away from an underlying surface 410. In this configuration, the actuator assembly 110 can selectively alter the upforce 412 or downforce 408 being applied to the row unit 106 by the actuator 414.

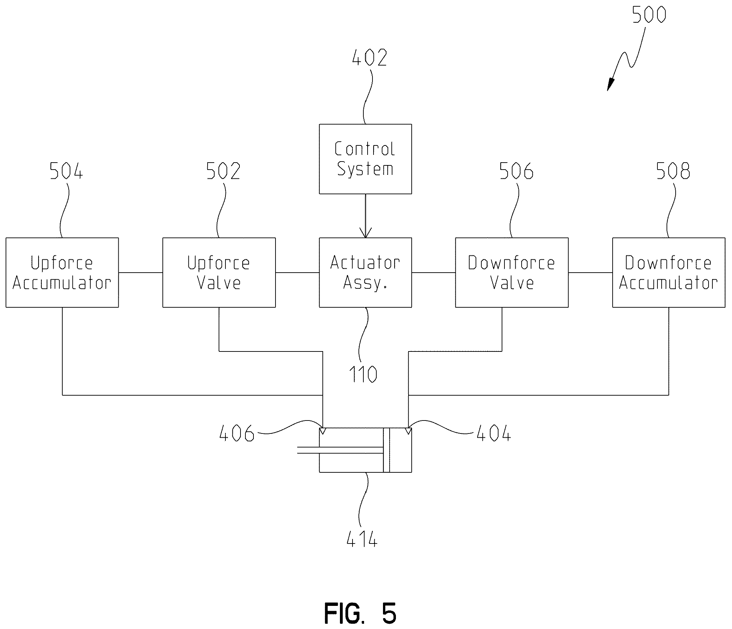

Referring now to Fig. 5, a schematic representation of a hydraulic assembly 500 is illustrated. More specifically, the actuator assembly 110 may selectively control an upforce valve 502 to alter the fluid conditions (such as fluid flow and pressure) provided to the upside 406 of the actuator 414. In the embodiment of Fig. 5, an upforce accumulator 504 may be fluidly coupled to the upside 406 of the actuator 414. Further still, one or more sensor may be fluidly coupled to the upside 406 to identify the fluid pressure and other fluid conditions on the upside 406. The sensor may communicate with the control system 402 to be further processed.

Similarly, the actuator assembly 110 may selectively control a downforce valve 506 to alter the fluid conditions (such as fluid flow and pressure) provided to the downside 404 of the actuator 414. In the embodiment of Fig. 5, a downforce accumulator 508 may be fluidly coupled to the downside 404 of the actuator 414. Further still, one or more sensor may be fluidly coupled to the downside 404 to identify the fluid pressure and other fluid conditions on the downside 404. The sensor may communicate with the control system 402 to be further processed.

The upforce accumulator 504 and downforce accumulator 508 may be any known accumulator design for the expected operating pressure ranges for the actuator assembly 110. In one example, the accumulators 504, 508 may contain a bladder or piston that fluidly separates the corresponding side 404, 406 from an air chamber in the corresponding accumulator 504, 508. In this configuration, if there is a pressure change in one of the sides 406, 408 of the actuator 414, the air in the corresponding accumulator 504, 508 can compress or expand to allow the fluid on the upside 406 and downside 404 of the actuator 414 to adapt to the pressure change by modifying the volume of fluid in one or more of the accumulators 504, 508.

In another embodiment contemplated herein, there may only be a downforce accumulator 508 on the downside 404 and no accumulator 504 on the upside 406. Alternatively, there may only be an upforce accumulator 504 on the upside 406 and no accumulator 508 on the downside 505. Further still, there may not be accumulators 504, 508 on the corresponding sides of the actuator 414. In this configuration, the valves 502, 506 may have a pressure relief configuration wherein if the pressure in the corresponding side 404, 406 of the actuators 414 becomes too great, the corresponding valve 502, 506 may allow fluid to flow through a pressure relief passage to accommodate the increased pressure in the corresponding side 404, 406 of the actuator 414.

Accordingly, this disclosure contemplates applying the teachings discussed herein to any known fluid configuration designed to accommodate changes applied to a fluid system due to force inputs from an actuator. Further, while separate valves 502, 506 are illustrated herein, other embodiments may have a single valve assembly that selectively provides fluid to the upside 406 and the downside 404. Accordingly, while Fig. 5 illustrates one embodiment containing separate valves 502, 506, this disclosure contemplates implementing the teachings discussed herein with any valve configuration capable of selectively controlling an actuator 414.

In one aspect of this disclosure, the actuator assembly 110 may selectively alter the fluid conditions of one or both of the downside 404 and upside 406 of the actuator 414 to modify the compliance of the response applied to input forces acting on the actuator 414. As used herein, the term "compliance" refers to the amount of force change per distance traveled by the rod of the actuator 414. More specifically, in one aspect of this disclosure the control system 402 may utilize the actuator assembly 110 to selectively alter the fluid pressure provided to both the upside 406 and the downside 404 of the actuator 414 to alter the compliance response to force inputs on the actuator 414. In the example of the downforce actuator 414 for a row unit assembly 400 discussed herein, modifying the compliance of the actuator 414 will alter the response characteristics of the row unit 106 based on contact between the row unit 106 and debris on the underlying surface 410 as will be discussed in more detail herein.

In one example, the compliance of the actuator 414 may have a relatively soft compliance configuration compared to a relatively firm compliance configuration, along with any number of compliance configurations therebetween. In this example, a user may desire a net pressure differential of ten pressure units between the upside 406 and the downside 404 to provide a net compliance pressure configuration. In both the soft compliance configuration and the firm compliance configuration, the pressure differential between the upside 406 and the downside 404 may remain ten pressure units such that both the soft compliance configuration and the firm compliance configuration maintain the net compliance pressure configuration when the actuator 414 is not experiencing additional force inputs. For this example, the soft compliance configuration may provide zero pressure units of fluid pressure to the upside 406 while providing ten pressure units of fluid pressure to the downside 404 to generate the net compliance pressure configuration. In this soft compliance configuration, the accumulators 504, 508 are minimally compressed and may allow the actuator 414 to move easily when an external force is applied thereto relative to the firm compliance configuration. In one example, the soft compliance configuration allows the row unit 106 to respond to force inputs along a soft force change profile. In the soft force change profile of the soft compliance configuration, ten units of force acting on the row unit 106 in the upforce direction 412 may move the actuator 414 to at least partially compress at least one of the accumulators 504, 508 and move the row unit 106 one inch in the upforce direction 412 relative to the tool bar 102.

Alternatively, in the firm compliance configuration of this example the actuator assembly 110 may provide one-hundred pressure units of pressure to the upside 406 while providing one-hundred and ten pressure units of pressure to the downside 404 to maintain the net compliance pressure configuration. In this configuration, the net difference between the upside 406 and the downside 404 is ten pressure units, which is the same as the example provided for the soft compliance configuration. However, the added pressure to both the upside 406 and downside 404 has at least partially compressed the corresponding accumulators 504, 508. Accordingly, the force input to the actuator 414 required to further compress the corresponding accumulators 504, 508 is higher in the firm compliance configuration relative to the soft compliance configuration. In one example, the firm compliance configuration allows the row unit 106 to respond to force inputs along a firm force change profile. In the firm force change profile of the firm compliance configuration, one-hundred units of force on the row unit 106 in the upforce direction 412 may move the actuator 414 to at least partially compress at least one of the accumulators 504, 508 and move the row unit 106 one inch in the upforce direction 412 relative to the tool bar 102.

In other words, in this example the soft compliance configuration exhibiting the soft force change profile allows the row unit 106 to move one inch in the upforce direction 412 when ten units of force are applied to the row unit 106 while the firm compliance configuration exhibiting the firm force change profile may require one-hundred units of force on the row unit 106 in the upforce direction 412 to achieve the same displacement of the row unit 106 relative to the toolbar 102. The specific numbers and examples for pressure and forces discussed herein are only one example intended to illustrate the relationship of the components discussed herein. A person skilled in the art understands that the actual pressure and corresponding forces used in practice will vary for the particular application.

Functionally, this results in the actuator 414 being much more resistant to substantial movement out of the net compliance pressure configuration when the actuator assembly 110 is in the firm compliance configuration relative to when the actuator assembly 110 is in the soft compliance configuration. In the examples discussed herein where the actuator 414 selectively controls the downforce applied to the row unit 106, the net compliance pressure configuration is the downforce or upforce the user wants the actuator 414 to apply to the row unit 106 under expected operating conditions.

In the soft compliance configuration, the row unit 106 may relatively easily move relative to the tool bar 102 when the row unit 106 contacts debris on the underlying surface because of the relatively uncompressed configuration of the accumulators 504, 508 compared to the firm compliance configuration. Alternatively, in the firm compliance configuration, the row unit 106 may resist substantial movement relative to the tool bar 102 compared to the soft compliance configuration when the row unit 106 contacts debris on the underlying surface because of the relatively compressed configuration of the accumulators 504, 508 compared to the soft compliance configuration.

In short, both the soft compliance configuration and the firm compliance configuration may apply the same net compliance pressure configuration and corresponding upforce 412 or downforce 408 in a neutral state of the row unit 106 on the underlying surface 410. However, the row unit 106 may respond to contact with debris along the underlying surface in a substantially different manner when the actuator assembly 110 is in the soft compliance configuration compared to the firm compliance configuration.

While a "soft compliance configuration" and a "firm compliance configuration" are discussed herein, these are just specific examples utilized to highlight the extreme applications of this disclosure. However, a person skilled in the art understands there are many different compliance configurations between the soft compliance configuration and the firm compliance configuration discussed herein, and each different compliance configuration may provide a slightly different response of the actuator 414 and row unit 106 relative to others. Any relative pressure value between the upside 406 and the downside 404 that maintains the desired net compliance pressure configuration and is within the physical capabilities of the actuator assembly 110 may be used as a desired compliance configuration.

Further, the term "pressure units" and "units of force" are used herein as a generic place holders for any unit for measuring pressure in a fluid system or the force applied to an object. A person skilled in the art understands that this could take many different forms without deviating from the teachings discussed herein. Accordingly, "pressure units" could be pounds per square inch, pascals, standard atmosphere, or millimeters of mercury among any other known pressure measuring unit. Similarly, "units of force" could be newtons or any other known unit of force. In use, a user may identify the desired net compliance pressure configuration and a corresponding desired compliance firmness, at or between the softest compliance configuration and the firmest compliance configuration. The net compliance pressure configuration may be selected by the user to determine how much downforce 408 or upforce 412 the user wants the actuator 414 to apply to the row unit 106 under typical working conditions. The user may select a desired net compliance pressure configuration based on the firmness of the underlying surface 410, for example. If the underlying surface is firm, the user may desire a strong downforce in the net compliance pressure configuration to ensure the cutting discs are able to properly create a furrow for seed distribution, among other reasons. Alternatively, if the underlying surface is soft, the user may desire a minimal downforce be applied in the net compliance pressure configuration to prevent the gauge wheels and closing discs from unnecessarily compressing the underlying surface, among other reasons.

Regardless of the desired net compliance pressure configuration selected by the user, the user may also select the desired compliance firmness based on the conditions of the underlying surface 410. If the underlying surface has many dirt clods and other debris that can be crushed by the gauge wheels, the user may desire a very firm compliance configuration such that the row unit 106 substantially resists moving from the net compliance pressure configuration unless a substantial piece of debris is contacted. In this very firm compliance configuration, the row unit 106 may substantially stay in the net compliance pressure configuration as dirt clods and other crushable or movable debris are processed by the row unit 106 without substantially moving the row unit 106 relative to the underlying surface 410. Alternatively, if the underlying surface is full of sweeping undulations, the user may desire a relatively soft compliance firmness to allow the row unit 106 to more easily move out of the net compliance configuration to transition along the undulating features of the underlying surface 410 to maintain proper seed depth, among other things.

In one aspect of this disclosure, the user may input their desired net compliance pressure configuration and compliance stiffness via the user interface 222. Alternatively, the net compliance pressure configuration and compliance stiffness may be preset when the agricultural machine is manufactured based on the known intended use of the agricultural machine.

While a single row unit 106 and corresponding hydraulic assembly 500 are illustrated herein, this disclosure also contemplates applying the teachings discussed herein to multiple actuators simultaneously, using one or more accumulator fluidly coupled to a series of actuators in parallel. For example, a plurality of row units may each have separate actuators configured to alter the downforce of each row unit independently of the others. Each actuator may have an upside and downside as discussed herein and the downside of each of the plurality of actuators may be fluidly coupled to one another in parallel. Similarly, the upside of each of the plurality of actuators may be fluidly coupled to one another in parallel. A single accumulator may be fluidly coupled to the downside of the plurality of actuators and a single accumulator may be fluidly coupled to the upside of the plurality of actuators. In this configuration, the control system 402 may selective alter the compliance configuration of the plurality of row units utilizing the teachings discussed herein by altering the fluid pressures on both the upside and downside of the plurality of actuators via a single valve for each of the upside and downside. That is to say, the control system 402 may provide fluid pressure from a source to the plurality of actuators utilizing one valve on the upside and one valve for the downside due to the parallel fluid configuration of the plurality of actuators.

Alternatively, this disclosure contemplates applying the teachings discussed herein to an agricultural machine have a plurality of row units wherein each of the row units has a dedicated hydraulic assembly similar to the hydraulic assembly 500 discussed herein. In this configuration, the compliance of each row unit may be independently controlled by the control system 402.

In yet other embodiments contemplated for this disclosure, the variable compliance actuator system could be applied to seat suspension or cab suspension systems. Further still, the teachings discussed herein could also be applied to whole vehicle suspension systems as well. In view thereof, this disclosure contemplates utilizing the teachings discussed herein for any application where it may be desirable to change response characteristics of an actuator from a softer response to a stiffer response and vice versa.

While embodiments incorporating the principles of the present disclosure have been described hereinabove, the present disclosure is not limited to the described embodiments. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A system for modifying a compliance of a downforce actuator (414) of an agricultural machine, comprising:
a row unit (106) coupled to a tool bar (102) through a linkage assembly (152);
an actuator (414) configured to selectively alter the downforce applied to the row unit (106), the actuator (414) having a downforce side configured to bias the row unit (106) towards an underlying surface (410) and an upforce side configured to bias the row unit (106) away from the underlying surface (410);
an actuator assembly (110) configured to selectively provide fluid separately to the downforce side and the upforce side of the actuator (414); and
a control system (402) configured to selectively engage the actuator assembly (110) to modify a downforce pressure provided to the downforce side and an upforce pressure provided to the upforce side;
wherein the control system (402) is configured to selectively transition the actuator (414) between a first compliance configuration and a second compliance configuration;
wherein the control system (402) modifies the downforce pressure and the upforce pressure of the actuator assembly (110) between the first compliance configuration and the second compliance configuration and maintains a pressure difference between the downforce pressure and the upforce pressure between the first compliance configuration and the second compliance configuration.

2. The system of claim 1, wherein the downforce side of the actuator (414) is fluidly coupled to a downforce accumulator (508) and the first compliance configuration provides a first downforce accumulator displacement and the second compliance configuration provides a second downforce accumulator displacement, the first downforce accumulator displacement being different from the second downforce accumulator displacement.

3. The system of claim 1 or 2, wherein the upforce side of the actuator (414) is fluidly coupled to an upforce accumulator (504).

4. The system of one of the claims 1 to 3, comprising a user interface (222) configured to receive a user input selecting the first compliance configuration or the second compliance configuration, wherein the control system (402) is configured to modify the actuator assembly (110) to the first compliance configuration or the second compliance configuration based on the user input.

5. The system of one of the claims 1 to 4, wherein the actuator assembly (110) comprises a downforce valve (506) fluidly coupled to the downforce side and configured to selectively alter the pressure of fluid provided to the downforce side of the actuator (414), the downforce valve (506) being selectively controllable by the control system (402).

6. The system of one of the claims 1 to 5, wherein the actuator assembly (110) comprises an upforce valve (502) fluidly coupled to the upforce side and configured to selectively alter the pressure of fluid provided to the upforce side of the actuator (414), the upforce valve (502) being selectively controllable by the control system (402).

7. The system of one of the claims 1 to 6, wherein the first compliance configuration provides a first force change profile of the actuator (414) and the second compliance configuration provides a second force change profile of the actuator (414), the first force change profile being different from the second force change profile.

8. A method of modifying response characteristics of an actuator (414), comprising the system of one of the claims 1 to 7, the method further comprising:
selectively transitioning the actuator (414) between a first compliance configuration and a second compliance configuration; and
modifying a first pressure provided to a first side of the actuator (414) and a second pressure provided to a second side of the actuator (414) when transitioning between the first compliance configuration and the second compliance configuration;
wherein a pressure difference between the first side and the second side is substantially the same between the first compliance configuration and the second compliance configuration.

9. The method of claim 8, wherein the first compliance configuration displaces the downforce accumulator (508) fluidly coupled to the first side a first displacement and the second compliance configuration displaces the downforce accumulator (508) a second displacement, the first displacement being different from the second displacement.

10. The method of claim 8 or 9, wherein the first compliance configuration displaces the upforce accumulator (504) fluidly coupled to the second side a third displacement and the second compliance configuration displaces the upforce accumulator (504) a fourth displacement, the third displacement being different from the fourth displacement.

11. The method of one of the claims 8 to 10, comprising receiving a user input selecting the first compliance configuration or the second compliance configuration and modifying the actuator assembly (110) to the first compliance configuration or the second compliance configuration based on the user input.

12. The method of one of the claims 8 to 11, comprising selectively altering the pressure of fluid provided to the first side of the actuator (414) with the first valve (506).

13. The method of one of the claims 8 to 12, selectively altering the pressure of fluid provided to the second side of the actuator (414) with a second valve (502).

14. The method of one of the claims 8 to 13, wherein the first compliance configuration provides a first force change profile of the actuator (414) and the second compliance configuration provides a second force change profile of the actuator (414), the first force change profile being different from the second force change profile.
